# EUROPÄISCHE PATENTSCHRIFT

(11) **EP 3 036 676 B1**
(45) Veröffentlichungstag und Bekanntmachung des Hinweises auf die Patenterteilung: **14.07.2021**
(21) Anmeldenummer: 14744794.0
(22) Anmeldetag: 15.07.2014
(51) Int. Cl.: G06F 21/55, G06F 21/62

(54) **VERFAHREN ZUR ABSICHERUNG EINER INTEGRIERTEN SCHALTUNG GEGEN UNBERECHTIGTE ZUGRIFFE**
METHOD FOR PROTECTING AN INTEGRATED CIRCUIT AGAINST UNAUTHORIZED ACCESS
PROCÉDÉ DE PROTECTION D'UN CIRCUIT INTÉGRÉ CONTRE DES ACCÈS NON AUTORISÉS

(30) Priorität: 22.08.2013 DE 102013216692
(43) Veröffentlichungstag der Anmeldung: 29.06.2016
(73) Patentinhaber: Siemens AG Österreich, 1210 Wien (AT)
(72) Erfinder: EPPENSTEINER, Friedrich, A-3620 Spitz (AT); GHAMESHLU, Majid, A-1110 Wien (AT); TAUCHER, Herbert, A-2340 Mödling (AT)
(74) Vertreter: Maier, Daniel Oliver
(86) Internationale Anmeldenummer: PCT/EP2014/065063
(87) Internationale Veröffentlichungsnummer: WO 2015/024711

(56) Entgegenhaltungen:
- EP-A1- 0 743 602
- EP-A2- 1 209 551
- GB-A- 2 445 303
- US-A- 5 373 289
- US-A- 5 530 749
- US-A- 5 699 514
- US-A1- 2005 233 724
- US-A1- 2009 287 904
- None

## Beschreibung

### Technisches Gebiet

Die vorliegende Erfindung betrifft allgemein das Gebiet der der logischen Schaltungen, insbesondere der integrierten, elektronischen Schaltungen wie z.B. anwendungsspezifische integrierte Schaltungen (ASICs), Field Programmable Gate Arrays (FPGAs) oder so genannter Ein-Chip-System. Im Speziellen bezieht sich die vorliegende Erfindung auf ein Verfahren zur Absicherung einer integrierten Schaltung gegen unberechtigte Zugriffe auf Schlüsselregister während einer Phase, in welcher Sicherheitsfunktionen noch nicht aktiviert sind. Durch in diesen Schlüsselregistern abgelegte Daten werden z.B. beim Hochlaufen der integrierten Schaltung und/oder im laufenden Betrieb Funktionen und/oder Anwendungen der integrierten Schaltung freigeschaltet und/oder aktiviert.

### Stand der Technik

Insbesondere in der Computertechnik bilden heutzutage elektronische bzw. logische Schaltungen eine Grundlage für jegliche Elektronik. Häufig sind diese Schaltungen als so genannte integrierte Schaltungen realisiert. Das bedeutet, die elektronische Schaltung besteht dabei aus einer Schaltung aus miteinander verbundenen Bauelementen, welche auf einem einzelnen Substrat, üblicherweise einem Halbleitersubstrat, untergebracht sind. Eine integrierte Schaltung weist dabei meist eine große Anzahl an verschiedenartigen Bauelementen und Baugruppen verbunden über Leiterzüge auf oder in einem einkristallinen Substrat - dem so genannten Chip - auf. Über die Integration ist möglich, Schaltungen mit umfangreichen Anwendungen und Funktionen auf einem kleinen Raum zur Verfügung zu stellen und technisch zu realisieren.

Eine Anwendung für integrierte Schaltungen stellen die so genannten anwendungsspezifische, integrierte Schaltungen oder Application-specific integrated Circuits (ASICs) dar, welche für spezielle Anwendungen erstellt werden. Bei ASICs werden die Funktionen und Anwendungen der integrierten Schaltung bereits bei Design, Entwicklung und Herstellung eindeutig festgelegt. D.h. sie sind fest vorgegeben und sollten nach einer Herstellung nicht mehr manipulierbar sein. Mittlerweile gibt es aber auch viele ASICs, in welche Mikroprozessoren, Signalprozessoren, etc. integriert sind, und welche damit für die darauf ablaufenden Funktionen und Anwendungen eine gewisse Flexibilität bieten.

In Gegensatz zu den ASICs sind die so genannten Field Programmable Gate Arrays oder FPGAs programmierbare, integrierte Schaltungen, welche durch Definitionen von Funktionsstrukturen und durch Vorgabe von Strukturvorschriften programmiert werden können. Das bedeutet, die Schaltungsstrukturen eines FPGAs können nach der Herstellung durch in den FPGA geladene Daten (z.B. Strukturvorschriften, Schaltpläne, etc.) festgelegt und/oder verändert werden. Mit einem FPGA-Baustein können somit durch die Programmierung unterschiedliche Schaltungen realisiert werden und die Schaltung oder implementierte Funktionen können dann durch einen Anwender verändert, verbessert oder erweitert werden. Damit können mit Hilfe von FPGAs einfache Zähler (z.B. Synchronzähler, etc.) bis zu hochkomplexen Schaltungen (z.B. Mikroprozessoren, etc.) entwickelt werden

Durch weitere Verkleinerungen und einen steigenden Integrationsgrad können mittlerweile ganze Systeme, welche z.B. mehrere Prozessoren, Controller, Speichereinheiten, Power-Management und weitere Komponenten umfassen, auf einem Chip untergebracht werden. Diese Systeme werden als Ein-Chip-System oder System-on-Chip (SoC) bezeichnet und finden in Bereichen Anwendung, in welchen kleine Abmessungen bei relativ hoher Leistung und eine Vielfalt an Funktionen wie z.B. im Mobilfunkbereich, bei Smartphones, bei Embedded Computers, etc. gefragt sind. Ein Ein-Chip-System oder System-on-Chip umfasst dabei alle oder zumindest einen großen Teil der Systemfunktionen in Form von Hardwarekomponenten (z.B. Prozessoren, Speichereinheiten, Peripherie-Einheiten, etc.) und Software-Komponenten (z.B. Anwendungen, Programme, etc.) in einer integrierten Schaltung auf einem Chip. Die HardwareKomponenten des Ein-Chip-Systems sind dabei über ein meist hierarchisches oder zumindest segmentiertes Bussystem verbunden.

Bei integrierten Schaltungen wie z.B. ASICs, FPGAs, etc. werden üblicherweise bestimmte Funktionen und Anwendungen durch Schlüsseldaten - so genannte "Magic Keys" - vor unerlaubten Zugriffen wie z.B. Hackerangriffen, Adressraum-Scanns, etc. geschützt. Eine derartig geschützte Funktion ist z.B. ein Freischalten oder Aktivieren einer Schnittstelle bzw. einer spezifischen Anwendung, welche z.B. nur höherwertigen Produkten oder Software-Komponenten vorbehalten sind. Dabei sind diese Funktionen nach einem Einschalten der integrierten Schaltung oder der Einheit, zu welcher die integrierte Schaltung gehört, zuerst gesperrt und werden erst durch z.B. eine Software-Komponente oder eine andere Anwendung der integrierten Schaltung beim Hochlaufen oder auch im laufenden Betrieb bei Bedarf freigegeben und aktiviert. Weiterhin sind auch Funktionen für Angriffs- und Betriebssicherheit der integrierten Schaltung häufig durch Schlüsseldaten vor unerlaubten Zugriffen geschützt oder werden z.B. nach dem Einschalten bei einem Hochlaufen der integrierten Schaltung mittels Schlüsseldaten aktiviert.

Die verwendeten Schlüsseldaten oder "Magic Keys" sind dazu meist in der Hardware der integrierten Schaltung fest kodierte Wert wie z.B. ein 32-bit Datenwort. Diese Werte werden dann für ein Freischalten und/oder Aktivieren der entsprechenden Funktionen oder Anwendungen in spezielle Register - so genannte Schlüssel- oder Freischalteregister mit schreibenden Zugriffen eingetragen. Als Register wird in der Computertechnik ein Speicherbereich bezeichnet, von welchen Operanden und Ergebnisse von Berechnungen oder Programmabläufen innerhalb der integrierten Schaltung unmittelbar aufgenommen werden. Erst wenn ein korrektes Schlüsseldatum in das entsprechende Schlüssel- oder Freischalteregister geschrieben worden ist, wird zugehörige Funktion, Schnittstelle, Sicherheitsfunktion, etc. freigegeben bzw. aktiviert. Eine Kenntnis von Adressen der Schlüsselregister sowie der Schlüsseldaten kann daher integrierte Schaltungen wie z.B. ASICs, FPGAs, System-on-Chips, etc. anfällig für Manipulationen machen. Daher kann beispielsweise bei systematischen Hackerangriffen versucht werden, z.B. mittels eines Adressraum-Scans oder durch gezieltes, systematisches Durchprobieren von allen möglichen Datenwerten für Schlüsseldaten an derartige Informationen zugelangen.

Zwar weisen integrierte Schaltungen beispielsweise Funktionen für Angriffs- und/oder Betriebssicherheit - meist in Form von Software-Komponenten - auf. Aber durch diese Sicherheitsfunktionen wird die integrierte Schaltung meist nur im laufenden Betrieb vor unberechtigten Zugriffen, Manipulationen der Daten, etc. geschützt. Die Sicherheitsfunktionen werden allerdings meist erst in einer Hochlauf-Phase der integrierten Schaltung z.B. über Schlüssel- oder Freischalteregister mit Schlüsseldaten aktiviert. D.h. insbesondere vor bzw. in der Hochlauf-Phase ist die integrierte Schaltung gegen unberechtigte Zugriffe vor allem auf Schlüsselregister nicht geschützt und die Sicherheitsfunktionen selbst können dabei manipuliert werden, da eine integrierte Schaltung selbst als elektronischer (Hardware-)Baustein üblicherweise nicht über Funktionalitäten für einen Schutz vor Angriffen mit z.B. von außen auf den Baustein geladener Programme (z.B. Malware, etc.) verfügt. Durch diese Programme kann beispielsweise ausgespäht werden, wo Schlüsselregister im Adressraum liegen oder mit welchen Registereinstellungen bestimmte Funktionen, Freischaltungen von Schnittstellen, etc. bewirkt werden. Die damit gewonnenen Informationen können dann z.B. einen Nachbau der Schaltung und/oder gezielte Hackerangriffe erlauben, durch welche beispielsweise sensible Daten manipuliert oder nach außen gesendet werden können.

Es besteht zwar z.B. die Möglichkeit Schlüsselregister, die entsprechenden Zugriffsadressen und die zugehörigen Schlüsseldaten geheim zu halten und/oder zu verschleiern. Dies kann jedoch nur in einem eingeschränkten Ausmaß verhindert, dass versucht wird, Schlüssel- bzw. Freischalteregister auszuspähen bzw. über unberechtigte Zugriffe an Information wie z.B. Schlüsselregister-Adressen und Schlüsseldaten zu gelangen. Weiterhin wird dabei ein unberechtigtes Eindringen in die integrierte Schaltung nur sehr schwer erkannt und es können damit keine raschen Abwehrmaßnahmen ausgelöst werden.

Aus den Dokument US 2009/0287904 A1 ist beispielsweise ein Verfahren zum Konfigurieren von Hardwarekomponenten bekannt, bei welchem durch Verwendung von so genannten Schattenregistern nur zulässige Konfigurationen für eine vorgegebene Hardware genutzt werden können. Die Schattenregister fungieren dabei als "Zugriffshüter" auf die Konfigurationsregister der Hardware, wobei schreibende Zugriffe auf ein Konfigurationsregister zuerst in ein entsprechendes Schattenregister geschrieben werden und mit Hilfe eines kryptographischen Hashregisters validiert werden.

### Darstellung der Erfindung

Der Erfindung liegt daher die Aufgabe zugrunde, ein Verfahren anzugeben, durch welche auf einfache Weise unberechtigte Zugriffe auf Schlüsselregister rasch erkannt und entsprechende Gegenmaßnahmen ausgelöst werden.

Diese Aufgabe wird durch ein Verfahren der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren der eingangs angeführten Art, bei welchem bei einem schreibenden Zugriff auf ein jeweiliges Schlüsselregister ein Vergleich von einem jeweils genutzten Datenwort mit vorgegebenen, in der Hardware der integrierten Schaltung fest kodierten Schlüsseldaten für das jeweilige Schlüsselregister durchgeführt wird. Dann wird jeder Zugriff auf das Schlüsselregister bzw. auf die Schlüsselregister der integrierten Schaltung mit einem von den vorgegebenen Schlüsseldaten abweichenden Datenwort als unberechtigt gekennzeichnet. Die als unberechtigt gekennzeichneten Zugriffe werden dann aufgezeichnet und analysiert. Auf Basis eines Analyseergebnisses der unberechtigten Zugriffe werden dann entsprechende Abwehrmaßnahmen gegen weitere unberechtigte Zugriffe auf die Schlüsselregister ausgelöst. Dabei werden in einer Phase, in welcher Sicherheitsfunktionen noch nicht aktiviert sind, die Sicherheitsfunktionen sofort eingeschaltet werden.

Der Hauptaspekt der gegenständlichen Erfindung besteht darin, dass damit sowohl in einer Start- oder Hochlauf-Phase der integrierten Schaltung als auch während des laufenden Betriebs Hackerangriffe wie z.B. systematische schreibende Zugriffe (z.B. ein Durchprobieren aller möglichen Werte der Schlüsseldaten, etc.) rasch erkannt werden. Da von einer Produkt-Software bzw. von den Software-Komponenten üblicherweise keine Zugriffe mit falschen Schlüsseldatenwerten auf die Schlüsselregister ausgeführt werden, können derartige Zugriffe leicht als unberechtigt bzw. als möglicher Angriffe identifiziert und damit ausgewertet werden. Darauf basieren können diese Angriffe dann auch rasch und effizient durch ein Auslösen von entsprechenden Abwehrmaßnahmen - wie z.B. eine Meldung an die Software-Komponenten (z.B. Security-Funktion, Safety-Funktion, etc.), Abbrechen einer Software-Komponente, Zurücksetzen der gesamten Schaltung, etc. - beendet werden. Weiterhin kann die gegenständliche Erfindung insbesondere in der Start- oder Hochlauf-Phase der Schaltung, in welche die Sicherheitsfunktionen meist noch nicht aktiviert sind, als aktiver Verteidigungs- und Sicherheitsschild für die integrierte Schaltung bzw. den elektronischen Baustein gegen Hackerangriffe und/oder Reverse Engineering-Versuche eingesetzt werden. Damit werden auf einfache Weise eine Verwendung von sensiblen Funktionen der integrierten Schaltung und unerlaubte Eingriffe z.B. in die Sicherheitsfunktionen von integrierten Schaltungen und Systemen mit ASICs und/oder FPGAs verhindert bzw. zumindest erschwert.

Bei einer Phase der integrierten Schaltung, wie einem Startvorgang bzw. einer Hochlauf-Phase, während der üblicherweise die Sicherheitsfunktionen der Schaltung noch nicht aktiviert sind bzw. aktiviert werden, werden durch die Erfindung auf einfache Weise auf Basis einer Auswertung der unberechtigten Zugriffe diese Sicherheitsfunktionen als Abwehrmaßnahmen sofort eingeschaltet werden, wenn z.B. ein Angriffe erkannt worden ist. Damit werden sofort Sicherheits- und Verteidigungsmaßnahmen aktiviert, welche üblicherweise erst nach einem normalen Hochlaufvorgang - d.h. z.B. einem Startvorgang ohne Hackerangriff - im laufenden Betriebe für eine Verteidigung und zum Schutz der integrierten Schaltung vorständig zur Verfügung stehen. Auf diese Weise kann die integrierte Schaltung bereits beim Startvorgang vor Hackerangriffen geschützt werden bzw. die Hackerangriffe erschwert werden.

Es ist dabei vorteilhaft, wenn für eine Analyse der unberechtigten Zugriffe auf die Schlüsselregister eine Anzahl der unberechtigten Zugriffe und/oder eine Anzahl der unberechtigten Zugriffe innerhalb eines vorgegebenen Zeitraums oder Zeitintervalls ausgewertet werden. Durch eine große Anzahl von unberechtigten Zugriffen bzw. eine hohe Anzahl von unberechtigten Zugriffen innerhalb eines vorgegebenen Zeitraums können sehr rasch Angriffe auf die Schlüsselregister der Schaltung identifiziert werden. Von schaltungsinternen Software-Komponenten wird üblicherweise nicht mit falschen Werten auf Schlüsselregister schreiben zugegriffen bzw. im Falle eines Software-Fehlers würde ein derartiger Zugriffe nur als singuläres Ereignis, aber nicht in einer größeren Anzahl von unberechtigten Zugriffen auftreten.

Weiterhin kann auch das Datenwort des Zugriffs auf ein Erkennen eines deterministischen Musters analysiert werden - es wird z.B. auf ein Schlüsselregister mit einem Datenwort, das inkrementiert wird, schreibend zugegriffen. Daraus kann beispielsweise ebenfalls auf einen Angriff geschlossen werden, da von einer Schaltungsinternen Software-Komponente nicht der Reihe nach alle möglichen Datenwörter für Schlüsseldaten durchprobiert werden.

Weiterhin ist es bei einem Startvorgang der integrierten Schaltung von Vorteil, wenn auf Basis der Auswertung der unberechtigten Zugriffe als Abwehrmaßnahme die integrierte Schaltung in einen definierten Anfangszustand zurückgesetzt wird. D.h. es wird ein so genannter Reset der integrierten Schaltung ausgelöst, durch welchen die Schaltung wieder in einen definierten Anfangszustand zurückgesetzt wird. Damit werden auch alle laufenden Software-Komponenten, insbesondere jene Komponente, welche den Hackerangriff beinhaltet, (z.B. eine so genannte Maleware, manipuliertes Software-Programm) beendet. Die durch die Attacke gewonnen Informationen über z.B. Funktionen der Schaltung, Registereinstellungen, etc. sind damit unvollständig und können z.B. nicht mehr für ein so genanntes Reverse Engineering herangezogen werden.

Das Auslösen eines Zurücksetzen in den definierten Anfangszustand der integrierten Schaltung bzw. der Resets kann idealer Weise in Abhängigkeit einer vorgegebenen Anzahl an unberechtigten Zugriffen erfolgen. Diese vorgegebene Anzahl von unberechtigten Zugriffen kann beispielsweise in der integrierten Schaltung (z.B. in einer Hardware-Komponente) festgelegt sein. Wird diese Anzahl an unberechtigten Zugriffen - d.h. an schreibenden Zugriffen mit einem falschen Datenwort auf ein Schlüsselregister - überschritten, so wird ein Reset der integrierten Schaltung durchgeführt. Es kann für das Auslösen des Resets auch eine Anzahl an unberechtigten Zugriffen innerhalb eines vorgegebenen Zeitintervalls oder ein Erkennen eines deterministischen Musters bei den für die unberechtigten Zugriffe genutzten Datenwörtern herangezogen werden. Damit wird auf einfache Weise sichergestellt, dass z.B. ein singulär auftretender unberechtigter Zugriff - d.h. es wird beispielsweise aufgrund eines Softwarefehlers mit einem falschen Datenwort auf ein Schlüsselregister zugegriffen - keinen Reset der Schaltung auslöst.

Es empfiehlt sich des weiteren, dass die Abwehrmaßnahmen vor dem Startvorgang - wie z.B. sofortiges Aktivieren der Sicherheitsfunktionen oder Auslösen eines Resets der Schaltung - nach einem erfolgreichen Startvorgang, bei welchem kein Angriffe oder eine große Anzahl von unberechtigten Zugriffen festgestellt worden ist, deaktiviert werden. Im laufenden Betriebe ist eine Aktivierung der Sicherheitsfunktionen als Abwehrmaßnahme nicht mehr notwendig, da diese bei einem ordnungsgemäßen Startvorgang je ohnehin eingeschaltet werden. Die Abwehrmaßnahme eines Resets kann beispielsweise nach einem erfolgreichen und ordnungsgemäßen Hochlaufen der integrierten Schaltung deaktiviert werden, da einerseits die Sicherheitsfunktionen nun aktiviert sind, und damit andererseits durch in Software-Komponenten der Schaltung enthaltene Zugriffe auf Schlüsselregister nicht versehentlich ein Reset der gesamten Schaltung ausgelöst wird.

Bei einer zweckmäßigen Fortbildung der Erfindung wird bei einem laufenden Betrieb - beispielsweise als Ergänzung zu den Sicherheitsfunktionen - auf Basis des Analyseergebnisses der unberechtigten Zugriffe auf Schlüsselregister ein Meldung in Form einer Unterbrechungsanforderung oder in Form einer speziellen an eine gerade ablaufende Software-Komponente gerichtete Zurücksetzanforderung gesendet. Durch das Senden einer Unterbrechungs- oder so genannten Interrupt-Anforderung wird die gerade ablaufende Software-Komponente der integrierten Schaltung, welche z.B. einen Programmcode für den Angriffe enthalten kann, unterbrochen. Es kann dann beispielsweise eine vordefinierte so genannte Interrupt-Routine ausgeführt werden, von welcher z.B. die Software-Komponente beendet oder eine Sicherheitsfunktion zum Schutz der Schlüsselregister gestartet wird. Durch die spezifische Zurücksetz- oder Resetanforderung kann die gerade laufende Software-Komponente und damit die z.B. drin enthaltene Malware abgebrochen werden, indem die Software-Komponente zurückgesetzt wird. Eventuell durch die unberechtigten Zugriffe auf die Schlüsselregister gewonnene Informationen sind damit unvollständig und nur schwer bis gar nicht für z.B. gezielte Hackerangriffe oder Reverse Engineering nutzbar.

Es ist aber auch vorteilhaft, wenn beim laufenden Betrieb bei Erkennen eines Angriffs auf Basis der Analyse der unberechtigten Zugriffe auf die Schlüsselregister festgelegte - z.B. besonders sensible - Funktionen der integrierten Schaltung deaktiviert werden. Auf diese Funktionen kann dann nicht mehr zugegriffen werden und es wird damit nicht mehr ersichtlich, in welchem Adressbereich beispielsweise diese Funktionen gelegen sind, durch welche Registereinstellungen die Funktionen z.B. aktivierbar sind, etc.

### Kurzbeschreibung der Zeichnung

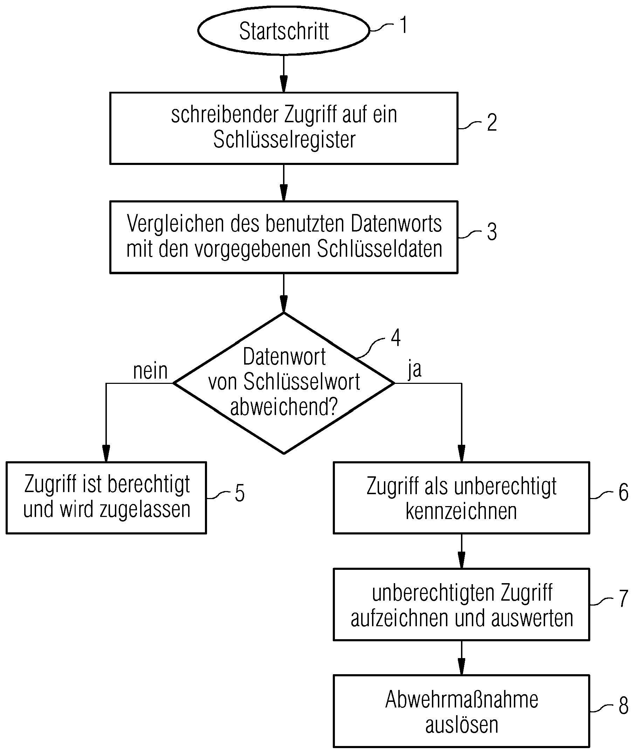

Die Erfindung wird nachfolgend in beispielhafter Weise anhand der beigefügten Figur erläutert. Figur 1 zeigt dabei schematisch einen beispielhaften Ablauf des erfindungsgemäßen Verfahrens zur Absicherung einer integrierten Schaltung gegen unberechtigte Zugriffe auf Schlüsselregister.

### Ausführung der Erfindung

Figur 1 zeigt in beispielhafter Weise schematisch einen Ablauf des Verfahrens zur Absicherung einer integrierten Schaltung gegen unberechtigte Zugriffe auf so genannte Schlüsselregister. Das erfindungsgemäße Verfahren beginnt mit einem Startschritt 1. In einem zweiten Verfahrensschritt 2 wird schreibend auf ein Schlüsselregister der integrierten Schaltung zugegriffen. Schlüssel- oder Freischalteregister sind spezielle Register, durch welche Funktionen wie z.B. Sicherheitsfunktionen, externe Schnittstellen, etc. beim Startvorgang der integierten Schaltungen oder im laufenden Betrieb durch z.B. höherwertige Software-Komponenten oder Software-Produkte aktiviert werden können. Dazu werden in diese Schlüsselregister von den entsprechenden Software-Komponenten bestimmte, meist in einer Hardware der Schaltung fest kodierte Schlüsseldaten, beispielsweise 32-bit lange Datenworte - so genannte "Magic Numbers" - geschrieben. Wird das korrekte Schlüsseldatenwort in das entsprechend Schlüsselregister eingetragen, so wird z.B. eine Funktion der integrierten Schaltung aktiviert oder eine Schnittstelle freigegeben.

In einem dritten Verfahrensschritt 3 werden daher die für den schreibenden Zugriff auf das Schlüsselregister genutzten Daten bzw. das benutzte Datenwort mit den vorgegebenen Schlüsseldaten verglichen. In einem vierten Verfahrensschritt 4 wird dann ausgewertet, ob das vom schreibenden Zugriff auf das Schlüsselregister benutzte Datenwort mit den in der Hardware der integrierten Schaltung fest kodierten Schlüsseldaten übereinstimmt oder von diesen abweicht. Wird im vierten Verfahrensschritt 4 festgestellt, dass das genutzte Datenwort korrekt ist, so wird der Zugriff auf das jeweilige Schlüsselregister in einem fünften Verfahrensschritt 5 als berechtigt betrachtet - d.h. der schreibende Zugriff auf das Schlüsselregister wird von einer berechtigten, höherwertigen Software-Komponente ausgeführt und es darf die entsprechende Funktion aktiviert bzw. die jeweilige Schnittstelle freigeschaltet werden.

Wird im vierten Verfahrensschritt 4 festgestellt, dass das für den schreibenden Zugriff auf das Schlüsselregister genutzte Datenwort von den vorgegebenen Schlüsseldaten abweicht, so wird in einem sechsten Verfahrensschritt 6 dieser Zugriff als unberechtigt gekennzeichnet. D.h. es wurde ein Zugriff mit einem ungültigen Datenwort auf das Schlüsselregister ausprobiert. Diese als unberechtigt gekennzeichneten Zugriffe werden dann in einem siebenten Verfahrensschritt 7 aufgezeichnet und z.B. an eine spezielle Software-Anwendung gemeldet. Von dieser Software-Anwendung können dann im siebenten Verfahrensschritt 7 die unberechtigten Zugriffe auf die Schlüssel- bzw. Freischalteregister der integrierten Schaltung ausgewertet werden. Dazu kann beispielsweise eine Anzahl der unberechtigten Zugriffe herangezogen werden, da bei einer gezielten oder systematischen Hackerattacke meist versucht wird, durch mehrfaches Zugreifen bzw. durch Probieren die Schlüsselregister z.B. ausfindig zu machen oder das entsprechende Datenwort zum Aktivieren/Freischalten zu finden. Es ist ebenfalls möglich, die unberechtigt gekennzeichneten Zugriffe nach einer Anzahl an unberechtigten Zugriffen innerhalb eines vorgegebenen Zeitraums oder Zeitintervalls auszuwerten, da bei Angriffen auf die Schaltung z.B. mittels Malware oder mittels eines Adressraum-Scans die entsprechenden Zugriffe meist zeitlich nahe beieinander gelegen sind bzw. sequenziell durchgeführt werden. Weiterhin ist es auch möglich, die bei den als unberechtigt gekennzeichneten Zugriffen genutzten Datenworte nach deterministischen Mustern auszuwerten. So kann eine Attacke auf die Schaltung beispielsweise auch daran erkannt werden, dass z.B. der Reihe nach alle möglichen Werte für die Schlüsseldaten durchprobiert werden und dabei z.B. das Datenwort inkrementiert oder dekrementiert wird.

Ist nun im siebenten Verfahrensschritt 7 z.B. eine Hackerattacke festgestellt worden, bei welcher versucht wird, Adressen der Schlüsselregister und/oder die zugehörigen Schlüsseldaten zu ermitteln, so werden in einem achten Verfahrensschritt 8 auf Basis des Analyseergebnisses entsprechende vorgegebene Abwehrmaßnahmen ausgelöst. Je nachdem, ob bei der integrierten Schaltung gerade ein Startvorgang durchgeführt wird oder sich die Schaltung sich im laufenden Betrieb befindet, können entsprechende Abwehrmaßnahmen durchgeführt werden.

Beim Startvorgang können im achten Verfahrensschritt 8 beispielsweise sofort bzw. vorzeitig die Sicherheitsfunktionen der integrierten Schaltung aktiviert oder eine zusätzliche Schutzfunktion eingeschaltet werden, um den Angriffe abzuwehren. Es kann aber auch die integrierte Schaltung nach Erkennen des Angriffs in einen definierten Anfangszustand zurückgesetzt werden. D.h. es wird ein so genannter Reset der Schaltung durchgeführt und damit beispielsweise eine schädliche Software oder eine schädliches Programm - eine so genannte Malware - beendet. Zum Auslösen des Resets kann z.B. eine festgelegte Anzahl von unberechtigten Zugriffen oder unberechtigten Zugriffen innerhalb eines bestimmten Zeitraums oder ein Erkennen von bestimmten Mustern beim benutzten Datenwort vorgegebenen werden, sodass nicht sofort bzw. bei jedem unberechtigten Zugriff ein Reset der gesamten integrierten Schaltung beim Startvorgang ausgelöst wird. Diese festgelegte Anzahl an unberechtigten Zugriffen kann z.B. in der Hardware der Schaltung festgelegt werden. Nach einem erfolgreichen Startvorgang, bei welchen keine Angriffe erkennbar waren, können diese Abwehrmechanismen teilweise oder vollständig deaktiviert werden, damit beispielsweise während des laufenden Betriebs der integrierten Schaltung keinen Reset oder verstärkte Schutzfunktionen aufgrund von Zugriffen durch berechtigten Software-Komponenten ausgelöst werden. Diese Abschaltung ist z.B. dann notwendig, wenn Software-Komponenten Zugriffe beinhalten, durch welche diese Abwehrmaßnahmen ausgelöst werden könnten.

Während des laufenden Betriebs der integrierten Schaltung können im achten Verfahrensschritt 8 auf Basis des Analyseergebnisses aus dem siebenten Verfahrensschritt 7 beispielweise Meldungen in Form von Unterbrechungs- oder speziellen Zurücksetzungsanforderungen für gerade laufende Software-Komponenten als Abwehrmaßnahme gesendet werden. Durch eine Unterbrechungsanforderung bzw. eine so genannten Interrupt-Anforderung - werden gerade laufende Software-Komponenten unterbrochen, um eine so genannte Interrupt-Routine auszuführen. Mit Hilfe dieser Interrupt-Routine kann dann beispielsweise der Angriff auf die integrierte Schaltung abgewehrt werden. Durch eine spezielle Zurücksetzungsanforderung können z.B. gerade laufende Software-Komponenten in einen Anfangszustand zurückgesetzt bzw. beendet werden. Damit werden auch sehr einfach z.B. eine Malware, welche in einer Software-Komponente enthalten sein kann, und der Angriff beendet. Weiterhin können als Abwehrmaßnahme im achten Verfahrensschritt 8 festgelegte - z.B. besonders sensible - Funktionen der integrierten Schaltung deaktiviert werden, damit diese z.B. nicht mehr beim Hackerangriffe ausgespäht oder nachvollzogen werden können.

Durch die jeweiligen Abwehrmaßnahme, welche durch das erfindungsgemäße Verfahren ausgelöst werden, soll damit verhindert werden, dass bei Angriffen auf die Schaltung verwertbare Informationen über z.B. ein Innenleben der integrierten Schaltung erhalten werden.

## Patentansprüche

1. Verfahren zur Absicherung gegen unberechtigte Zugriffe auf Schlüsselregister während einer Phase bei einer integrierten, elektronischen Schaltung, in welcher Sicherheitsfunktionen noch nicht aktiviert sind, wobei durch ein Ablegen von vorgegebenen, in einer Hardware der integrierten Schaltung fest kodierten Schlüsseldaten in diesen Schlüsselregistern Funktionen der integrierten, elektronischen Schaltung freigeschaltet und/oder aktiviert werden, **dadurch gekennzeichnet, dass** bei einem schreibenden Zugriff auf ein jeweiliges Schlüsselregister ein Vergleich von einem jeweils genutzten Datenwort mit vorgegebenen, in der Hardware der integrierten Schaltung fest kodierten Schlüsseldaten für das jeweilige Schlüsselregister durchgeführt wird (2, 3), dass dann der Zugriff auf das Schlüsselregister mit einem Datenwort, welches von den vorgegebenen Schlüsseldaten für das jeweilige Schlüsselregister abweichend ist, als unberechtigt gekennzeichnet wird (4, 6), dass dann als unberechtigt gekennzeichnete Zugriffe auf das jeweilige Schlüsselregister aufgezeichnet und analysiert werden (7), und wobei in der Phase der integrierten Schaltung, in welcher die Sicherheitsfunktionen noch nicht aktiviert sind, auf Basis einer Auswertung der unberechtigten Zugriffe als Abwehrmaßnahmen diese Sicherheitsfunktionen sofort eingeschaltet werden (8).

2. Verfahren nach Anspruch 1, **dadurch gekennzeichnet, dass** für eine Analyse der unberechtigten Zugriffe auf die Schlüsselregister eine Anzahl der unberechtigten Zugriffe, eine Anzahl der unberechtigten Zugriffe innerhalb eines vorgegebenen Zeitraums und/oder Muster von unberechtigten Zugriffen ausgewertet werden (7).

3. Verfahren nach einem der Ansprüche 1 bis 2, **dadurch gekennzeichnet, dass** beim Startvorgang auf Basis der Auswertung der unberechtigten Zugriffe als Abwehrmaßnahme die integrierte Schaltung in einen definierten Anfangszustand zurückgesetzt wird (8).

4. Verfahren nach Anspruch 3, **dadurch gekennzeichnet, dass** für ein Zurücksetzen der integrierten Schaltung eine ein Überschreiten einer vorgegebenen Anzahl an unberechtigten Zugriffen geprüft wird (8).

5. Verfahren nach einem der Ansprüche 1 bis 4, **dadurch gekennzeichnet, dass** die Abwehrmaßnahmen für den Startvorgang nach einem erfolgreichen Startvorgang deaktiviert werden (8).

6. Verfahren nach einem der Ansprüche 1 bis 2, **dadurch gekennzeichnet, dass** bei einem laufenden Betrieb auf Basis des Analyseergebnisses als Abwehrmaßnahme eine Meldung in Form einer Unterbrechungsanforderung oder einer spezifischen Zurücksetzanforderung an gerade in Betrieb befindliche Komponenten der integrierten Schaltung gesendet werden (8).

7. Verfahren nach einem der Ansprüche 1 bis 2 und Anspruch 6, **dadurch gekennzeichnet, dass** beim laufenden Betrieb auf Basis des Analyseergebnisses als Abwehrmaßnahme festgelegte Funktionen der integrierten Schaltung deaktiviert werden (8).

## Claims

1. Method for protecting against unauthorised accessing of key registers during a phase in an integrated, electronic circuit, in which security functions are not yet activated, wherein functions of the integrated, electronic circuit are enabled and/or activated by storing predefined key data, which is hard-coded in hardware of the integrated circuit, in said key registers, **characterised in that**, when a respective key register is write-accessed, a data word respectively used is compared (2, 3) with predefined key data, which is hard-coded in hardware of the integrated circuit, for the respective key register, access to the key register using a data word that is at variance with the predefined key data for the respective key register is marked as unauthorised (4, 6), accesses to the respective key register marked as unauthorised are then recorded and analysed (7), and wherein, in the phase of the integrated circuit in which the security functions are not yet activated, on the basis of the evaluation of the unauthorised accesses, these security functions are immediately switched on as protective measures.

2. Method according to claim 1, **characterised in that**, for analysing the unauthorised accesses to the key registers, a number of unauthorised accesses, a number of unauthorised accesses within a predefined period of time and/or patterns of unauthorised accesses are evaluated (7).

3. Method according to one of claims 1 to 2, **characterised in that**, in the startup process, on the basis of the evaluation of the unauthorised accesses, the integrated circuit is reset (8) to a defined initial state as a protective measure.

4. Method according to claim 3, **characterised in that**, for an integrated circuit reset, a check is performed (8) to ascertain whether a predefined number of unauthorised accesses has been exceeded.

5. Method according to one of claims 1 to 4, **characterised in that** the protective measures for the startup process are deactivated (8) after a successful startup.

6. Method according to one of claims 1 to 2, **characterised in that**, during ongoing operation, on the basis of the results of the analysis, a message in the form of an interrupt request or a specific reset request is transmitted (8) to currently operating components of the integrated circuit as a protective measure.

7. Method according to one of claims 1 to 2 and claim 6, **characterised in that**, during ongoing operation, on the basis of the results of the analysis, specified functions of the integrated circuit are deactivated (8) as a protective measure.

## Revendications

1. Procédé de protection contre des accès non autorisés à des registres clés pendant une phase dans un circuit électronique intégré dans laquelle des fonctions de sécurité ne sont pas encore activées, dans lequel, par une inscription, dans ces registres clés, de données clés prédéfinies codées en dur dans une partie matérielle du circuit intégré, des fonctions du circuit électronique intégré sont déverrouillées et/ou activées,
**caractérisé en ce que**, lors d'un accès en écriture à un registre clé respectif, une comparaison d'un mot de données respectivement utilisé avec des données clés prédéfinies pour le registre clé respectif, codées en dur dans la partie matérielle du circuit intégré, est exécutée (2, 3),
**en ce qu'**ensuite, l'accès au registre clé avec un mot de données qui est différent des données clés prédéfinies pour le registre clé respectif est signalé comme étant non autorisé (4, 6), et
**en ce qu'**ensuite, des accès au registre clé respectif signalés comme étant non autorisés sont enregistrés et analysés (7),
dans lequel, dans la phase du circuit intégré, dans laquelle les fonctions de sécurité ne sont pas encore activées, ces fonctions de sécurité sont instantanément activées (8) sur la base d'une évaluation des accès non autorisés, à titre de mesures de défense.

2. Procédé selon la revendication 1, **caractérisé en ce que**, pour une analyse des accès non autorisés aux registres clés, un nombre des accès non autorisés, un nombre des accès non autorisés dans une période prédéterminée et/ou un modèle d'accès non autorisés sont évalués (7).

3. Procédé selon l'une des revendications 1 à 2, **caractérisé en ce que**, lors du processus de démarrage, sur la base de l'évaluation des accès non autorisés, en tant que mesure de défense, le circuit intégré est réinitialisé (8) dans un état initial défini.

4. Procédé selon la revendication 3, **caractérisé en ce que**, pour une réinitialisation du circuit intégré, un dépassement d'un nombre prédéterminé d'accès non autorisés est examiné (8).

5. Procédé selon l'une des revendications 1 à 4, **caractérisé en ce que** les mesures de défense pour le processus de démarrage sont désactivées (8) après un processus de démarrage réussi.

6. Procédé selon l'une des revendications 1 à 2, **caractérisé en ce qu'**en cours de fonctionnement, sur la base du résultat d'analyse, une notification sous forme d'une demande d'interruption ou d'une demande de réinitialisation spécifique est envoyée (8) à des composantes du circuit intégré qui sont en fonctionnement à ce moment, à titre de mesure de défense

7. Procédé selon l'une des revendications 1 à 2 et la revendication 6, **caractérisé en ce qu'**en cours de fonctionnement, sur la base du résultat d'analyse, des fonctions définies du circuit intégré sont désactivées (8), à titre de mesure de défense.
